# EUROPÄISCHE PATENTSCHRIFT

(11) **EP 0 999 951 B1**
(45) Veröffentlichungstag und Bekanntmachung des Hinweises auf die Patenterteilung: **14.03.2001**
(21) Anmeldenummer: 98948683.2
(22) Anmeldetag: 28.07.1998
(51) Int. Cl.: B60R 13/10, G09F 3/16

(54) **PARKSCHEINHALTER**
PARKING TICKET HOLDER
SUPPORT DE TICKET DE STATIONNEMENT

(30) Priorität: 29.07.1997 DE 29713446 U
(43) Veröffentlichungstag der Anmeldung: 17.05.2000
(73) Patentinhaber: Kreutz, Wilhelm, 51109 Köln (DE)
(72) Erfinder: Kreutz, Wilhelm, 51109 Köln (DE)
(74) Vertreter: Schüssler, Andrea, Dr.
(86) Internationale Anmeldenummer: DE9802138
(87) Internationale Veröffentlichungsnummer: WO9906240

(56) Entgegenhaltungen:
- DE-A- 4 114 055
- DE-A- 4 402 979
- DE-A- 19 654 698
- FR-A- 2 638 879
- FR-A- 2 643 483
- FR-A- 2 672 414
- FR-A- 2 729 779

## Beschreibung

Die vorliegende Erfindung betrifft einen Parkscheinhalter, wie er aus FR-A-2 672 414 bekannt ist.

Der Parkvorgang in einem herkömmlichen Parkhaus gestaltet sich üblicherweise wie folgt:

Der Kfz-Fahrer fährt mit seinem Fahrzeug in einen Eingangsbereich des Parkhauses, wo er vor einer Einfahrtsschranke anhalten muß. Nach Herunterkurbeln des Fensters betätigt er einen Druckknopf an einer links neben dem Fahrzeug gelegenen Säule, die daraufhin einen Parkschein ausgibt. Der Fahrer entnimmt den Parkschein, woraufhin sich die Einfahrtsschranke öffnet und er mit seinem Fahrzeug in das Parkhaus einfahren kann. Das Parkhaus verläßt er zu Fuß. Wenn er mit seinem Fahrzeug das Parkhaus wieder verlassen will, muß der zuvor gelöste Parkschein in einen Kassenautomaten eingeführt werden. Nachdem die Parkgebühr bezahlt worden ist, wird der Parkschein und nach Anforderung auch ein Quittungsschein ausgegeben. Den Parkschein muß der Fahrer bei der Ausfahrt aus dem Parkhaus bereithalten und ihn in eine im Ausfahrtsbereich befindliche Säule stecken, woraufhin sich die Ausfahrtsschranke öffnet.

Bei diesem bekannten System der Abrechnung über Parkscheine ergibt sich für den Fahrer das Problem, daß er bei der Einfahrt vom Zeitpunkt der Entnahme des Parkscheins bis zum Abstellen seines Fahrzeugs und bei der Ausfahrt vom Zeitpunkt des Losfahrens bis zum Einstecken des Parkscheines an der Ausfahrtsäule nicht weiß, was er mit dem Parkschein anfangen soll. Aus diesem Grunde werden die Parkscheine oftmals auf dem Beifahrersitz abgelegt, zwischen den Zähnen festgehalten oder in Jackettbrusttaschen od. dgl. eingesteckt. Dabei kann es passieren, daß der Parkschein z.B. unter den Sitz fällt, zunächst nicht mehr auffindbar ist usw. Da in den Einfahrten und Ausfahrten von Parkhäusern meistens reger Betrieb herrscht, stellen Situationen, in denen der Fahrer aus einem solchen Grund den jeweiligen Bereiche nicht schnellstmöglich passieren kann, Streßsituationen dar.

Aufgabe der vorliegenden Erfindung ist es, hier Abhilfe zu schaffen.

Diese Aufgabe wird durch einen Parkscheinhalter gemäß Anspruch 1, umfassend eine Einrichtung zum Aufnehmen und Halten eines eingeführten Parkscheins und eine Einrichtung zum Befestigen in einem Fahrzeuginnenraum, gelöst.

Vorteilhafte Ausgestaltungen sind Gegenstand der Unteransprüche.

Die Erfindung wird nachstehend beispielhaft anhand einer bevorzugten Ausführungsform und unter Bezug auf die beigefügten Zeichnungsfiguren beschrieben, die Folgendes zeigen:
- Figur 1: zeigt eine Ausführungsform eines Parkscheinhalters in perspektivischer Ansicht zusammen mit dem einzuführenden Parkschein;
- Figur 2: zeigt die Anordnung aus Figur 1 aus Richtung II gesehen;
- Figur 3: zeigt die Anordnung aus Figur 1 aus Richtung III gesehen;
- Figur 4: zeigt eine perspektivische Ansicht einer zweiten Ausführungsform eines Parkscheinhalters; und
- Figur 5: zeigt eine perspektivische Ansicht einer dritten Ausführungsform eines Parkscheinhalters.

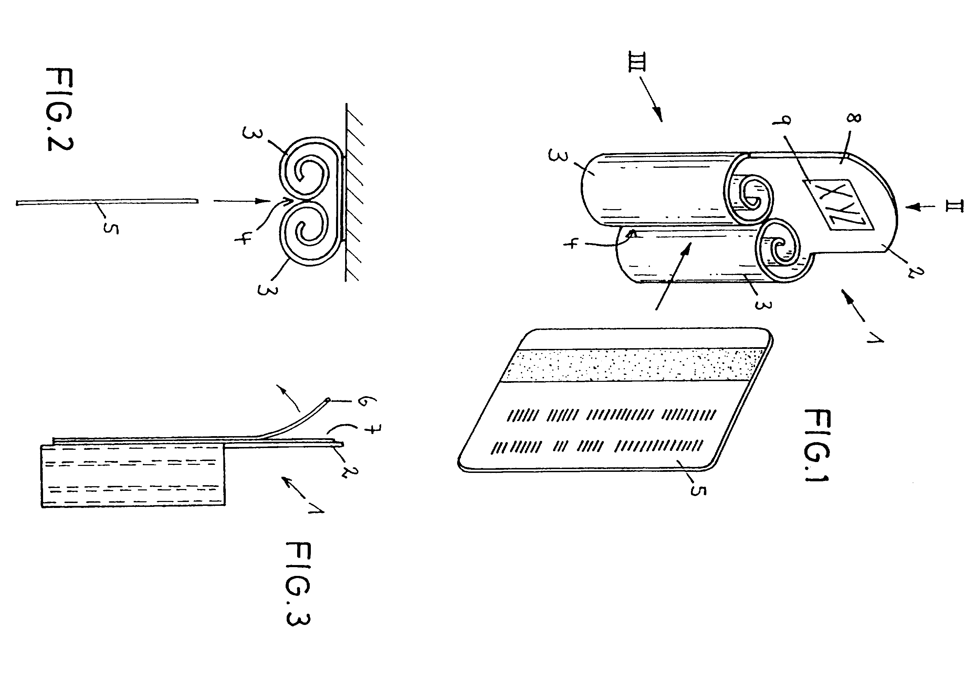

In Figur 1 ist eine erste Ausführungsform des Parkscheinhalters 1 dargestellt. Dieser besteht aus einer Grundplatte 2, an die im unteren Bereich an der rechten und linken Seite zwei von außen nach innen aufgerollte, spiralförmige Halterungsteile 3 angebracht sind. Der gesamte Parkscheinhalter 1 besteht vorzugsweise aus Kunststoff, kann aber auch z.B. aus Federstahl hergestellt sein. Die spiralförmigen Halterungsteile 3 berühren sich entlang einer Berührlinie 4, wie insbesondere aus der Figur 2 ersichtlich ist.

Der aufzubewahrende Parkschein 5 wird durch einfaches Einstecken zwischen die beiden spiralförmigen Halterungsteile 3 sicher gehalten. Die Federkraft der spiralförmigen Halterungsteile 3 sollte nicht zu groß sein, damit der Parkschein 5 durch leichten Zug wieder entfernt werden kann. Insbesondere kann der Parkschein 5 aber auch dadurch leicht entfernt werden, daß er in Richtung der Längsachse der spiralförmigen Halterungsteile 3 nach oben oder unten herausgeschoben wird.

Wie in Figur 3 dargestellt ist, befindet sich an der Rückseite der Grundplatte 2 des Parkscheinhalters 1 zur Befestigung desselben im Fahrzeuginnenraum eine Klebefolie 7, die nach Abziehen der Schutzfolie 6 z.B. auf dem Armaturenbrett oder an der Fahrertür aufgeklebt werden kann.

Um den Parkscheinhalter für die Werbegeschenkindustrie nutzbar zu machen, weist dieser in seinem oberen Bereich 8 eine Fläche 9 zur Anbringung von Firmenlogos od. dgl. Werbung auf, wie in Figur 1 dargestellt.

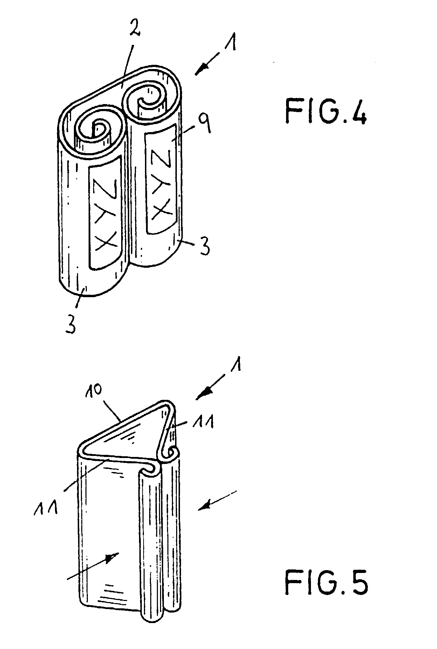

In Figur 4 ist eine weitere Ausführungsform des Parkscheinhalters 1 dargestellt. Gleiche bzw. gleichwirkende Teile sind mit gleichen Bezugsziffern bezeichnet. Der Parkscheinhalter 1 unterscheidet sich von dem in Figur 1 gezeigten Parkscheinhalter dadurch, daß die Grundplatte 2 keinen über die Erstreckung der spiralförmigen Halterungsteile 3 hinausgehenden Bereich bildet. Vielmehr besteht der gesamte Parkscheinhalter 1 im wesentlichen aus den beiden spiralförmigen Halterungsteilen 3, die über ihre gesamte Höhe an der hinteren Seite über die Grundplatte 2 verbunden sind. Die Bedienung dieses Parkscheinhalters 1 gestaltet sich wie oben unter Figur 1 beschrieben. Auch dieser Parkscheinhalter 1 weist Werbeflächen 9 auf, und zwar auf den Vorderseiten der spiralförmigen Halterungsteile 3. An der Rückseite der Grundplatte 2 befindet sich ebenfalls eine hier nicht näher dargestellte Befestigungseinrichtung, z.B. eine Klebefolie oder aber ein Dauermagnet.

Eine besonders materialsparende Variante eines Parkscheinhalters ist in Figur 5 dargestellt. Dieser Parkscheinhalter 1 besteht in seinem Querschnitt im wesentlichen aus einem gleichseitigen Dreieck mit Basisseite 10 und zwei Schenkeln 11, die an ihrer Vorderseite zur leichteren Aufnahme des Parkscheins umgebogen sind. Auch diese Ausführungsform des Parkscheinhalters 1 wird wiederum mit einem hier nicht näher dargestellten Klebestreifen od. dgl. im Fahrzeuginnenraum befestigt.

Sämtliche vorgenannten Ausführungsformen können als separates Zubehörteil vertrieben werden. Es ist jedoch auch möglich, diese Parkscheinhalter unmittelbar bei der Konzeption eines Fahrzeuginnenraums harmonisch in diesen einzupassen. So ist es beispielhaft möglich, zum Fahrgastinnenraum hin lediglich einen Schlitz auszubilden, in den der Parkschein eingeführt wird und der eine dahinterliegende Haltemöglichkeit für den Parkschein wie z.B. vorbeschrieben aufweist.

Der Gebrauch sämtlicher vorstehend beschriebener Ausführungsformen von Parkscheinhaltern gestaltet sich wie folgt:

Der Fahrer fährt mit seinem Fahrzeug in den Einfahrtsbereich des Parkhauses ein, zieht dort einen Parkschein und befestigt diesen sogleich in dem Parkscheinhalter. Er hat nun die Hände frei für den aufgrund der Enge in Parkhäusern mitunter schwierigen Einfahrvorgang. Beim Abstellen seines Fahrzeugs entnimmt er den Parkschein dem Parkscheinhalter und bewahrt diesen z.B. in seinem Portemonnaie auf. Nach Bezahlung der Parkgebühr geht der Fahrer mit dem Parkschein wieder zu seinem Fahrzeug, steckt diesen in den Parkscheinhalter ein und kann so wiederum ungehindert die Ausfahrt antreten. An der Ausfahrtsäule entnimmt er den Parkschein dem Parkscheinhalter und führt ihn in die Säule ein.

Löst der Fahrer üblicherweise bei Bezahlung der Parkgebühr auch einen Quittungsschein, ist es denkbar, daß er diese Quittungsscheine in einem zweiten Parkscheinhalter sammelt, da die Halter aufgrund der Flexibilität der spiralförmigen Halterungsteile 3 bzw. der Schenkel 11 durchaus mehrere Parkscheine bzw. Quittungsscheine aufzunehmen in der Lage sind. In diesem Zusammenhang ist es auch möglich, einen Parkscheinhalter vorzusehen, der zwei Aufnahmemöglichkeiten für Parkscheine aufweist.

Wichtig ist, daß der Parkschein mit nur einer Hand in den Parkscheinhalter eingeführt werden kann, da nur so eine leichte Bedienbarkeit gewährleistet ist. Außerdem ist es aus Sicherheitsgründen zu bevorzugen, wenn eine Hand am Lenkrad verbleiben kann.

Die Befestigung im Fahrzeuginnenraum sollte dort erfolgen, wo die den Parkschein greifende Hand leicht hinreichen kann. Dies kann z.B. bei Rechtshändern eine andere Stelle sein als bei Linkshändern. Nur durch leichte Zugänglichkeit des Parkscheinhalters wird gewährleistet, daß dieser auch benutzt wird. Das Herausziehen des Parkscheins aus dem Automaten und das Einstecken in den Parkscheinhalter (bei Einfahrt in das Parkhaus) bzw. das Herausziehen des Parkscheins aus dem Parkscheinhalter und das Einstecken in den Automaten (bei Ausfahrt aus dem Parkhaus) wird so zu einer Bewegung, an die sich der Fahrzeugführer schnell gewöhnt.

Die Erfindung wurde vorstehend anhand derzeit bevorzugter Ausführungsformen beschrieben, die jedoch nicht den durch die nachfolgenden Ansprüche definierten Schutzbereich einschränken sollen.

### BEZUGSZIFFERNLISTE

- 1: Parkscheinhalter
- 2: Grundplatte
- 3: spiralförmige Halterungsteile
- 4: Berührlinie
- 5: Parkschein
- 6: Schutzfolie
- 7: Klebefolie
- 8: oberer Bereich
- 9: Werbefläche
- 10: Basis
- 11: Schenkel

## Patentansprüche

1. Parkscheinhalter zur Anbringung in einem Fahrzeug, umfassend eine mit einer Hand bedienbare Einrichtung (3; 11) zum Aufnehmen und Halten eines eingeführten Parkscheins (5) und eine Einrichtung (7) zum Befestigen in einem Fahrzeuginnenraum in Reichweite des Fahrers des Fahrzeugs, **dadurch gekennzeichnet**, daß gegeneinander wirkende Federelemente (3; 11), als zwei Schenkel ausgebildet sind, die sich entlang einer ihrer Außenkanten berühren (4) und so eine Aufnahme für den Parkschein (5) bilden und an ihrer Vorderseite zur leichteren Aufnahme symmetrisch umgebogen sind.

2. Parkscheinhalter nach Anspruch 1, dadurch gekennzeichnet, daß die Federelemente als zwei Schenkel (11) eines gleichseitigen Dreiecks (10, 11) ausgebildet sind.

3. Parkscheinhalter nach Anspruch 1 oder 2, dadurch gekennzeichnet, daß Einrichtung zum Befestigen in einem Fahrzeuginnenraum aus einer an der Rückseite des Parkscheinhalters befestigten Klebefolie (7) besteht.

4. Parkscheinhalter nach einem der Ansprüche 1 bis 3, dadurch gekennzeichnet, daß Einrichtung zum Befestigen in einem Fahrzeuginnenraum aus einem an der Rückseite des Parkscheinhalters befestigten Magneten besteht.

5. Parkscheinhalter nach einem der Ansprüche 1 bis 4, dadurch gekennzeichnet, daß der Parkscheinhalter (1) eine Werbefläche (9) aufweist.

6. Parkscheinhalter nach einem der Ansprüche 1 bis 5, dadurch gekennzeichnet, daß er mehrere Einrichtungen (3; 11) zum Aufnehmen und Halten eines eingeführten Parkscheins (5) aufweist.

7. Parkscheinhalter nach Anspruch 6, dadurch gekennzeichnet, daß er zwei Einrichtungen (3; 11) zum Aufnehmen und Halten eines eingeführten Parkscheins (5) aufweist.

8. Parkscheinhalter nach einem der Ansprüche 1 bis 7, dadurch gekennzeichnet, daß er in den Fahrzeuginnenraum eines Kraftfahrzeugs integriert ist.

9. Parkscheinhalter nach Anspruch 8, dadurch gekennzeichnet, daß er hinter einem im Armaturenbrett des Kraftfahrzeugs vorgesehenen Schlitz angeordnet ist.

## Claims

1. Parking ticket to be attached in a vehicle, comprising a device (3;11), operable with one hand, for receiving and holding a parking ticket (5) inserted into it and a device (7) for securing in a vehicle interior within the reach of the driver of the vehicle, **characterised in that** the resilient elements acting against one another are configured as two members which touch one another along one of their outer edges (4) and thus form a receiver for the parking ticket (5) and are bent round symmetrically on their front side to accommodate the ticket more easily.

2. Parking ticket holder according to claim 1, **characterised in that** the resilient elements are configured as two sides (11) of an equilateral triangle (10, 11).

3. Parking ticket holder according to claim 1 or 2, **characterised in that** the device for securing in a vehicle interior comprises an adhesive film (7) secured to the rear side of the parking ticket holder.

4. Parking ticket holder according to one of claims 1 to 3, **characterised in that** the device for securing in a vehicle interior comprises a magnet secured to the rear side of the parking ticket holder.

5. Parking ticket holder according to one of claims 1 to 4, **characterised in that** the parking ticket holder (1) has an advertising surface (9).

6. Parking ticket holder according to one of claims 1 to 5, **characterised in that** it has a plurality of devices (3; 11) for receiving and holding a parking ticket (5) inserted in it.

7. Parking ticket holder according to claim 6, **characterised in that** it has two devices (3; 11) for receiving and holding a parking ticket (5) inserted in it.

8. Parking ticket holder according to one of claims 1 to 7, **characterised in that** it is integrated in the interior of an automotive vehicle.

9. Parking ticket holder according to claim 8, **characterised in that** it is arranged behind a slot provided in the dashboard of the automotive vehicle.

## Revendications

1. Support de ticket de stationnement destiné à être fixé dans un véhicule, comprenant un dispositif utilisable d'une main (3; 11) pour saisir et retenir un ticket de stationnement (5) introduit dedans et un dispositif (7) pour la fixation dans l'habitacle d'un véhicule à la portée du chauffeur du véhicule, **caractérisé en ce que** des éléments élastiques (3; 11) agissant l'un contre l'autre sont constitués de deux branches qui se rejoignent le long de l'un de leurs bords extérieurs (4) formant ainsi une prise pour le ticket de stationnement (5) et qui sont retroussés de façon symétrique sur leurs extrémités frontales pour faciliter la prise.

2. Support de ticket de stationnement selon la revendication 1, **caractérisé en ce que** les éléments élastiques sont les deux branches (11) d'un triangle équilatéral (10, 11).

3. Support de ticket de stationnement selon la revendication 1 ou 2, **caractérisé en ce que** le dispositif pour la fixation dans l'habitacle d'un véhicule consiste en un film collant (7) fixé au dos du support de ticket de stationnement.

4. Support de ticket de stationnement selon l'une des revendications 1 à 3, **caractérisé en ce que** le dispositif de fixation dans l'habitacle d'un véhicule se compose d'un aimant fixé au dos du support de ticket de stationnement.

5. Support de ticket de stationnement selon l'une des revendications 1 à 4, **caractérisé en ce que** le support de ticket de stationnement (1) présente une surface publicitaire (9).

6. Support de ticket de stationnement selon l'une des revendications 1 à 5, **caractérisé en ce qu**'il est muni de plusieurs dispositifs (3; 11) pour saisir et retenir un ticket de stationnement (5) introduit dedans.

7. Support de ticket de stationnement selon la revendication 6, **caractérisé en ce qu**'il est muni de deux dispositifs (3; 11) pour saisir et retenir un ticket de stationnement (5) introduit dedans.

8. Support de ticket de stationnement selon l'une des revendications 1 à 7, **caractérisé en ce qu**'il est intégré dans l'habitacle d'un véhicule automobile.

9. Supports de ticket de stationnement selon la revendication 8, **caractérisé en ce qu'**il est disposé derrière une fente prévue dans le tableau de bord du véhicule automobile.
